(19) **Europäisches Patentamt / European Patent Office / Office européen des brevets**

(11) **EP 4 641 517 A1**

(12) **EUROPEAN PATENT APPLICATION**
published in accordance with Art. 153(4) EPC

(43) Date of publication:
29.10.2025  Bulletin 2025/44

(21) Application number: 23910014.2

(22) Date of filing: 06.12.2023

(51) International Patent Classification (IPC):
**G06V 10/764** (2022.01)    **H04B 10/079** (2013.01)

(52) Cooperative Patent Classification (CPC):
G06V 10/62; G06V 10/764; G06V 10/774;
H04B 10/079; H04B 17/00

(86) International application number:
**PCT/CN2023/136834**

(87) International publication number:
**WO 2024/140084 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  29.12.2022  CN 202211728138

(71) Applicant: ZTE CORPORATION
Shenzhen, Guangdong 518057 (CN)

(72) Inventors:
• **WANG, Dajiang**
Shenzhen, Guangdong 518057 (CN)

• **MA, Zhaomian**
Shenzhen, Guangdong 518057 (CN)
• **JIA, Tingyao**
Shenzhen, Guangdong 518057 (CN)
• **WANG, Qilei**
Shenzhen, Guangdong 518057 (CN)
• **BO, Kaitao**
Shenzhen, Guangdong 518057 (CN)

(74) Representative: **Ziebig Hengelhaupt Intellectual Property Attorneys**
**Patentanwaltskanzlei PartGmbB**
**Leipziger Straße 49**
**10117 Berlin (DE)**

(54) **DEVICE SELF-MAINTENANCE METHOD AND APPARATUS, ELECTRONIC DEVICE, AND STORAGE MEDIUM**

(57)    Embodiments of the present application relate to the field of communications, and provide a device self-maintenance method and apparatus, an electronic device, and a storage medium. The method comprises: acquiring a performance parameter sequence of a device, wherein the performance parameter sequence comprises a preset number of performance parameter sets collected from the device according to a preset collection period, and each performance parameter set comprises at least one performance parameter of the device; acquiring a performance parameter time sequence image of the device according to the performance parameter sequence; inputting the performance parameter time sequence image into a pre-trained hidden danger identification model to obtain a hidden danger identification result corresponding to the performance parameter time sequence image; and displaying the hidden danger identification result.

FIG. 1

Flowchart:

S10 — Acquire a performance parameter sequence of a device

S11 — Acquire a performance parameter time sequence image of the device according to the performance parameter sequence

S12 — Input the performance parameter time sequence image into a pre-trained hidden danger identification model to obtain a hidden danger identification result corresponding to the performance parameter time sequence image

S13 — Display the hidden danger identification result

**Description**

CROSS-REFERENCE TO RELATED APPLICATIONS

The present application claims priority to the Chinese patent application No. 202211728138.4 filed on December 29, 2022 to the China Patent Office, and entitled "DEVICE SELF-MAINTENANCE METHOD AND APPARATUS, ELECTRONIC DEVICE, AND STORAGE MEDIUM", the entire content of which is incorporated herein by reference.

TECHNICAL FIELD

The present application relates to the technical field of communications, in particular to a device self-maintenance method and apparatus, an electronic device, and a storage medium.

BACKGROUND

With development of a communication technology, development of a communication device to intelligence has become inevitable, and higher requirements have been put forward for self-maintenance of the communication device, wherein automatic hidden danger identification and repair is an important part of the self-maintenance of the communication device. Taking an optical transmission network (OTN) as an example, emergence and development of an autonomous network technology provides a major means for realization of an objective of intelligence of an optical network. The autonomous network (AN) technology originates from an "Autonomous Networks" concept proposed by the international TeleManagement Forum (TM Forum) in 2019. Currently, the AN concept has already reached a consensus in the industry.

A device fault hidden danger that may exist in the communication device is usually identified by analyzing performance indexes of the communications device. However, affected by a variety of factors such as a model, batch, quality, service life, and operational stability of the communication device, performance parameters change complexly, and have poor regularity in a mapping relationship with an operational state of the communication device, and thus it is difficult to identify the device fault hidden danger. There is also a lack of an algorithmic technology to efficiently identify the corresponding device fault hidden danger, resulting in low efficiency of identifying the device fault hidden danger.

SUMMARY

An objective of embodiments of the present application is to provide a device self-maintenance method and apparatus, an electronic device, and a storage medium, which can obtain a hidden danger identification result of the device through an artificial intelligence technology, and improve efficiency and accuracy of identifying a device fault hidden danger.

In order to solve the above technical problems, the embodiments of the present application are implemented through the following aspects.

In a first aspect, an embodiment of the present application provides a device self-maintenance method, including: acquiring a performance parameter sequence of a device, wherein the performance parameter sequence includes a preset number of performance parameter sets collected from the device according to a preset collection period, and each performance parameter set includes at least one performance parameter of the device; acquiring a performance parameter time sequence image of the device according to the performance parameter sequence; inputting the performance parameter time sequence image into a pre-trained hidden danger identification model to obtain a hidden danger identification result corresponding to the performance parameter time sequence image; and displaying the hidden danger identification result.

In a second aspect, an embodiment of the present application provides a device self-maintenance apparatus, including: a first acquiring module, configured to acquire a performance parameter sequence of a device, wherein the performance parameter sequence includes a preset number of performance parameter sets collected from the device according to a preset collection period, and each performance parameter set includes at least one performance parameter of the device; a second acquiring module, configured to acquire a performance parameter time sequence image of the device according to the performance parameter sequence; a determining module, configured to input the performance parameter time sequence image into a pre-trained hidden danger identification model to obtain a hidden danger identification result corresponding to the performance parameter time sequence image; and a displaying module, configured to display the hidden danger identification result.

In a third aspect, an embodiment of the present application provides an electronic device, including: a memory, a processor, and a computer executable instruction stored on the memory and runnable on the processor. The computer executable instruction, when executed by the processor, implements and executes the steps of the method described in the first aspect.

In a fourth aspect, an embodiment of the present application provides a computer-readable storage medium. The computer-readable storage medium is configured to store a computer executable instruction. The computer executable instruction, when executed by a processor, implements the steps of the method described in the first aspect.

BRIEF DESCRIPTION OF DRAWING(S)

In order to explain technical solutions in embodiments of the present application or the prior art more clearly, accompanying drawings that need to be used in descriptions of the embodiments or the prior art will be briefly introduced below. Apparently, the accompanying drawings in the following descriptions are only some embodiments recorded in the present application, and those of ordinary skill in the art can further obtain other accompanying drawings from these accompanying drawings without creative work.

FIG. 1 shows a schematic flowchart of a device self-maintenance method provided by an embodiment of the present application.

FIG. 2 shows another schematic flowchart of a device self-maintenance method provided by an embodiment of the present application.

FIG. 3 shows an example of a normal sample performance parameter time sequence image provided by an embodiment of the present application.

FIG. 4 shows an example of a hidden danger sample performance parameter time sequence image provided by an embodiment of the present application.

FIG. 5 shows a schematic structural diagram of a generative adversarial network (GAN) provided by an embodiment of the present application.

FIG. 6 shows yet another schematic flowchart of a device self-maintenance method provided by an embodiment of the present application.

FIG. 7 shows a schematic structural diagram of a device self-maintenance apparatus provided by an embodiment of the present application.

FIG. 8 shows a schematic structural diagram of another device self-maintenance apparatus provided by an embodiment of the present application.

FIG. 9 shows a schematic structural diagram of yet another device self-maintenance apparatus provided by an embodiment of the present application.

FIG. 10 is a schematic diagram of a hardware structure of an electronic device performing a device self-maintenance method provided by an embodiment of the present application.

DETAILED DESCRIPTION

In order to enable those in the technical field to better understand technical solutions in the present application, the following will clearly and completely describe the technical solutions in embodiments of the present application in conjunction with accompanying drawings in the embodiments of the present application. Apparently, the described embodiments are only part of the embodiments of the present application, rather than all the embodiments. Based on the embodiments in the present application, all other embodiments obtained by those of ordinary skill in the art without making creative work should belong to the scope of protection of the present application.

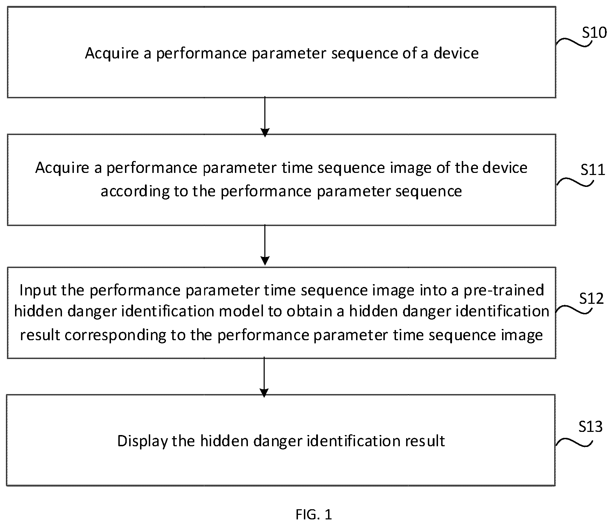

FIG. 1 shows a schematic flowchart of a device self-maintenance method provided by an embodiment of the present application. The method may be performed by an electronic device, such as a terminal device or a server device. In other words, the method may be performed by software or hardware installed on the terminal device or the server device. A server includes, but is not limited to: a single server, a server cluster, a cloud server, or a cloud server cluster, etc. As shown in FIG. 1, the method may include the following steps.

Step S10: a performance parameter sequence of a device is acquired.

The performance parameter sequence includes a preset number of performance parameter sets collected from the device according to a preset collection period. Each performance parameter set includes at least one performance parameter of the device.

The device herein may be a device unit in a communication device, such as an optical module in an OTN, may also be a certain communication device, such as an OTN device, and may further be a combination of a plurality of communication devices that share a certain communication function in a load-sharing, master-standby, or cloudification manner, which is not limited by the present disclosure.

Exemplarily, the preset collection period may be 5 minutes, and the preset number may be 36, i.e., a collection duration may be 3 hours. Each sampling moment corresponds to one performance parameter set. Each performance parameter set may include at least one performance parameter of the device. Taking the optical module in the OTN as an example, the performance parameters may include input optical power (IOP), output optical power (OOP), bias current (BC), temperature offset (TO), and working voltage (WV).

According to a difference in a meaning of each performance parameter, the above performance parameters may be acquired through a maintenance platform of the device (e.g., some performance parameters are acquired through performance statistical indexes of the maintenance platform of the device), or may also be acquired directly through the device (e.g., some performance parameters are acquired through interaction with the device or actively reported by the device according to a preset period).

Step S11: a performance parameter time sequence image of the device is acquired according to the performance parameter sequence.

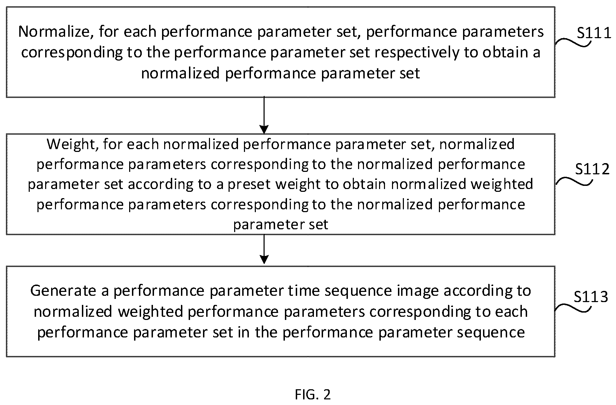

FIG. 2 shows another schematic flowchart of a device self-maintenance method provided by an embodiment of the present application. As shown in FIG. 2, step S11 may include the following steps.

Step S111: for each performance parameter set, performance parameters corresponding to the performance parameter set are normalized respectively to obtain a normalized performance parameter set.

A preset normalization method may be adopted to normalize the performance parameters. For example, a following formula I may be adopted for linear normalization.

$$\mathrm{X}' = \frac{(x - X\_min)}{(X\_max - X\_min)} \text{ (I)}$$

where *x'* is a normalized performance parameter, *x* is a performance parameter to be normalized, and *X_min* and *X_max* are respectively normalization parameters that may be a preset performance parameter minimum value and performance parameter maximum value respectively.

It needs to be noted that impacts of the performance parameters on identification of a final device fault hidden danger are different, and normalization methods may be different, so that impacts of numerical changes of the normalized performance parameters on the identification of the device fault hidden danger may be weighted. For example, the larger performance parameter 1 characterizes a great possibility of the device fault hidden danger, while the smaller performance parameter 2 characterizes a great possibility of the device fault hidden danger, then the performance parameter 1 may be normalized adopting the above formula I, and the performance parameter 2 may be normalized adopting a following formula II, so that the larger normalized performance parameters characterize the great possibility of the device fault hidden danger.

$$\mathrm{X}' = \frac{(X\_max - x)}{(X\_max - X\_min)} \text{ (II)}$$

where *x'* is a normalized performance parameter, *x* is a performance parameter to be normalized, and *X_min* and *X_max* are respectively normalization parameters that may be a preset performance parameter minimum value and performance parameter maximum value respectively.

Step S112: for each normalized performance parameter set, normalized performance parameters corresponding to the normalized performance parameter set are weighed according to a preset weight to obtain normalized weighted performance parameters corresponding to the normalized performance parameter set.

Exemplarily, the normalized weighted performance parameters of each normalized performance parameter set may be obtained through a following formula III.

$$\mathrm{X}'_i = \sum_{j=1}^{n} \omega_j \times x'_{i,j} \text{ (III)}$$

**where** $x'_i$ is a normalized weighted performance parameter corresponding to an i-th normalized performance parameter set, $\omega_j$ is a preset weight of a j-th normalized performance parameter, n is the number of normalized performance parameters in the normalized performance parameter set, and taking an OTN optical module as an example, n may be 5, and $x'_{i,j}$ is the j-th normalized performance parameter in the i-th normalized performance parameter set.

Step S113: a performance parameter time sequence image is generated according to normalized weighted performance parameters respectively corresponding to each performance parameter set in a performance parameter sequence.

Exemplarily, the performance parameter time sequence image may be any one of a line chart, a histogram, or a bar chart.

Step S12: the performance parameter time sequence image is input into a pre-trained hidden danger identification model to obtain a hidden danger identification result corresponding to the performance parameter time sequence image.

In some possible implementations, the hidden danger identification model may be a trained GAN model. In another possible implementation, the hidden danger identification model may also be a convolutional neural network, such as a region-based convolutional neural network (RCNN). The model of the convolutional neural network is complex, whereas a GAN is simpler and more efficient compared to the convolutional neural network for identification of the device hidden danger in binary classification identification of the identified performance parameter time sequence image.

A training objective of a discriminative network of the GAN model is to identify whether the performance parameter time sequence image is a normal sample performance parameter time sequence image or a hidden danger sample performance parameter time sequence image. The normal sample performance parameter time sequence image characterizes that the hidden danger identification result is a device normality result, while the hidden danger sample performance parameter time sequence image characterizes that the hidden danger identification result is a fault hidden danger result, and the device needs to be processed.

Step 13: the hidden danger identification result is displayed.

After the hidden danger identification result corresponding to the performance parameter time sequence image is obtained, the hidden danger identification result may be displayed to a user. In some possible implementations, the hidden danger identification result may be displayed to the user on a maintenance platform of the device in a manner such as a log, an alarm, or a prompt window.

Adopting the above solution, the hidden danger identification result of the device can be obtained through an artificial intelligence technology, and efficiency and accuracy of identifying the device fault hidden danger are improved.

In some embodiments, the hidden danger identification model is obtained by training in the following manner:

step 11: a hidden danger identification training sample set is acquired.

The hidden danger identification training sample set includes a plurality of sample performance parameter time sequence images and a labeling result respectively corresponding to each sample performance parameter time sequence image. The sample performance parameter time sequence images include normal sample performance parameter time sequence images and hidden danger sample performance parameter time sequence images.

In some possible implementations, the hidden danger identification training sample set may specifically be acquired through the following steps.

A plurality of sample performance parameter sequences are collected from the device or a similar device of the device. Each sample performance parameter sequence includes a preset number of sample performance parameter sets collected from the device or the similar device of the device according to a preset collection period. Each sample performance parameter set includes at least one sample performance parameter of the device or the similar device of the device.

Still taking the OTN optical module as an example, the plurality of sample performance parameter sequences may be collected from a plurality of optical modules of the same type. A collection period is 5 minutes. A preset number may be 36. In some possible implementations, a collection duration may be a longer period of time, e.g., a week. From collection data corresponding to the collection duration, a normal sample performance parameter sequence and a hidden danger sample performance parameter sequence may be acquired by taking a sliding window of the preset number (e.g., 36) of sample performance parameter sets as a window size. Each sample performance parameter sequence includes 36 sample performance parameter sets. Each sample performance parameter set includes 5 performance parameters corresponding to the OTN optical module listed in step 10.

Each sample performance parameter set of the normal sample performance parameter sequence characterizes that the device is in a normal state, while the device is in an abnormal state at a moment corresponding to at least one sample performance parameter set in the hidden danger sample performance parameter sequence (e.g., the device is in the abnormal state at a moment corresponding to a 36-th sample performance parameter set in the 36 sample performance parameter sets). The above abnormal state may be a fault alarm of the device (e.g., a fault alarm of the OTN optical module) or a communication fault alarm associated with the device (e.g., a fiber outage corresponding to the OTN optical module).

A corresponding sample performance parameter time sequence image is acquired according to each sample performance parameter sequence.

In some possible implementations, the corresponding sample performance parameter time sequence image may be acquired according to each sample performance parameter sequence and according to the steps of FIG. 2. The normal sample performance parameter time sequence image may be acquired according to the normal sample performance parameter sequence. The hidden danger sample performance parameter time sequence image may be acquired according to the hidden danger sample performance parameter sequence.

The sample performance parameter time sequence image and the performance parameter time sequence image are same in type, e.g. both are line charts.

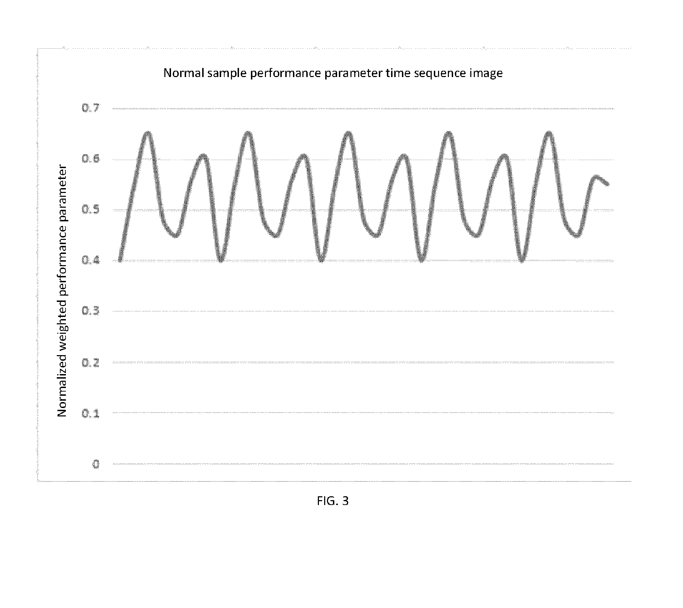

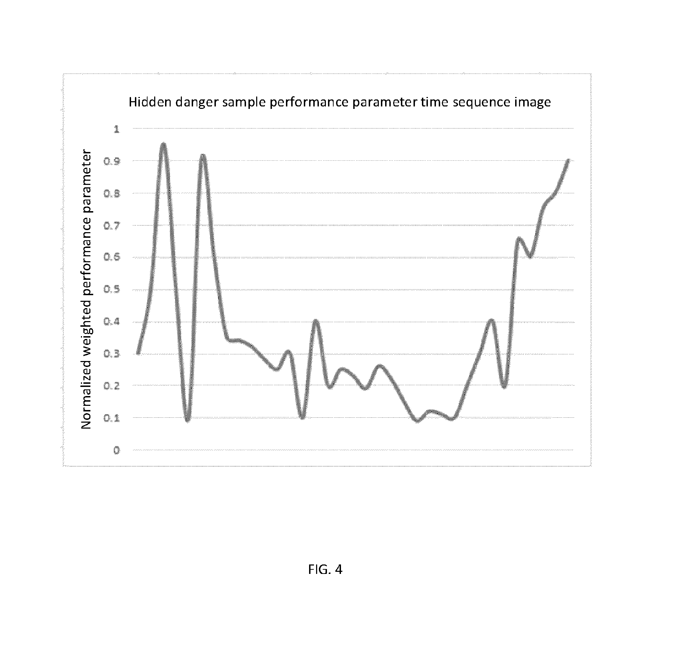

FIG. 3 shows an example of a normal sample performance parameter time sequence image provided by an embodiment of the present application. FIG. 4 shows an example of a hidden danger sample performance parameter time sequence image provided by an embodiment of the present application .

In response to an annotation operation by a user, a labeling result corresponding to each sample performance parameter time sequence image is acquired.

In some possible implementations, in order to improve labeling efficiency, only a hidden danger sample performance parameter time sequence image may be identified.

Step 12: a preset neural network model is trained according to a hidden danger identification training sample set to obtain a hidden danger identification model.

In some possible implementations, the preset neural network model is a generative adversarial network (GAN).

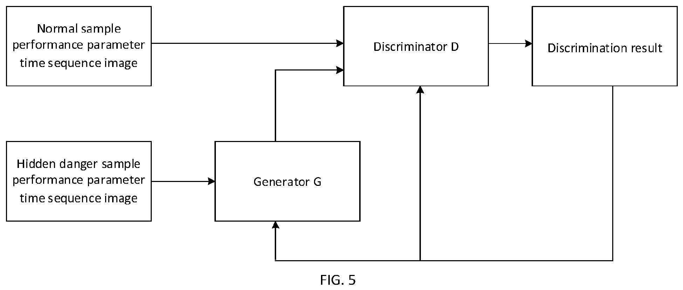

FIG. 5 shows a schematic structural diagram of a generative adversarial network (GAN) provided by an embodiment of the present application. As shown in FIG. 5, the generative adversarial network (GAN) includes a generator G and a discriminator D. A hidden danger sample performance parameter time sequence image in a hidden danger identification training sample set is input to the generator G. An output of the generator G and a normal sample performance parameter time sequence image are input to the discriminator D. The generator and/or the discriminator are trained and optimized through a discrimination result of the discriminator D. During a training process, an objective of the generator G is to generate a real picture (i.e., the normal sample performance parameter time sequence image) as much as possible to deceive a discrimination model D, while an objective of the discriminator D is to distinguish the picture generated by G from a real picture as much as possible. In this way, G and D constitute a dynamic "game process". Through such mutual game learning, the GAN eventually generates a better output.

The generative adversarial network (GAN) is a model that incorporates unsupervised learning. In this way, in a case of insufficient hidden danger sample performance parameter time sequence images, by learning to identify normal sample performance parameter time sequence images without hidden danger marks, performance parameter time sequence images with fault hidden dangers are discriminated, so as to discover an essential law of the fault hidden dangers, reducing a cost and period of data collection, and improving efficiency of data collection. In addition, the generative adversarial network (GAN) may discover an essential law of a probability distribution of the fault hidden dangers, and therefore has a stronger generalization ability than an ordinary discriminative network. In addition, the generative adversarial network (GAN) adopts a backpropagation gradient descent method during the training process, which improves application efficiency of a hidden danger identification model.

Adopting the above solution, a hidden danger identification result of a device can be obtained through an artificial intelligence technology, and efficiency and accuracy of identifying the device fault hidden dangers are improved.

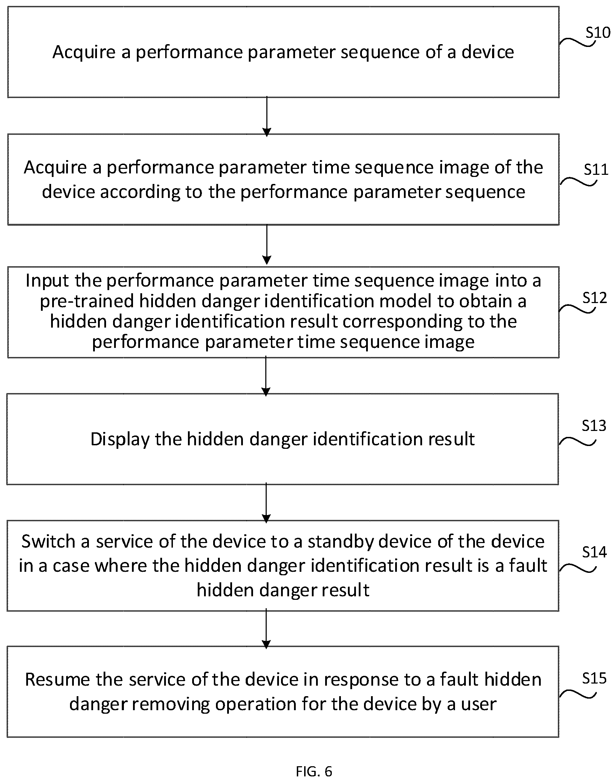

FIG. 6 shows yet another schematic flowchart of a device self-maintenance method provided by an embodiment of the present application. As shown in FIG. 6, a hidden danger identification result includes a device normality result or a fault hidden danger result. The method may further include the following steps:

step 14: a service of the device is switched to a standby device of the device in a case where the hidden danger identification result is the fault hidden danger result.

The standby device may be a device that has a primary standby, load sharing or cloud backup relationship with the device. The service of the device is switched to the standby device of the device in the case where the hidden danger identification result of a performance parameter time sequence image of the device is the fault hidden danger result.

Taking an OTN optical module as an example, after an optical module B detects a fault hidden danger, OTN electric layer and optical layer services carried by the optical module B are first inverted or rerouted, so as to avoid an impact of a sudden fault of the optical module B on the services.

Adopting the above solution, in a case of detecting the fault hidden danger of the device, the fault may be actively isolated, avoiding the impact of the sudden fault on the service, and improving an ability of self-maintenance of the device.

Step 15: the service of the device is resumed in response to a fault hidden danger removing operation for the device by a user.

In some possible implementations, in response to the fault hidden danger removing operation for the device by the user, the device may, after determining that communication of the device is normal through service detection means, such as handshaking, resume the service of the device, i.e., the service that is originally switched to the standby device is switched back to the device.

Still taking the OTN optical module as an example, after the user replaces or repairs the optical module B and performs tuning testing and repair verification processing of the optical module B, the OTN electric layer and optical layer services originally carried by the optical module B may be resumed to the repaired optical module B.

Adopting the above solution, fault isolation may be released in a case of detecting removal of the device fault hidden danger, which further improves the ability of self-maintenance of the device.

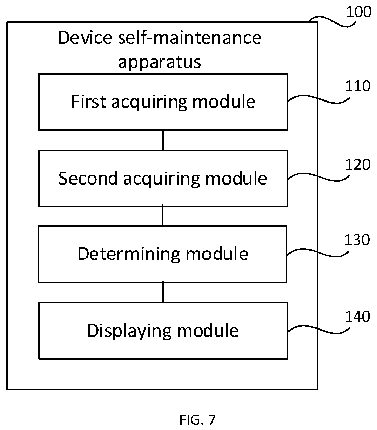

FIG. 7 shows a schematic structural diagram of a device self-maintenance apparatus provided by an embodiment of the present application. The apparatus 100 includes: a first acquiring module 110, a second acquiring module 120, a determining module 130, and a displaying module 140.

The first acquiring module 110 is configured to acquire a performance parameter sequence of a device. The performance parameter sequence includes a preset number of performance parameter sets collected from the device according to a preset collection period. Each performance parameter set includes at least one performance parameter of the device.

The second acquiring module 120 is configured to acquire a performance parameter time sequence image of the device according to the performance parameter sequence.

The determining module 130 is configured to input the performance parameter time sequence image into a pre-trained hidden danger identification model to obtain a hidden danger identification result corresponding to the performance parameter time sequence image.

The displaying module 140 is configured to display the hidden danger identification result.

In some possible implementations, the second acquiring module 120 is configured to normalize, for each performance parameter set, performance parameters corresponding to the performance parameter set respectively to obtain a normalized performance parameter set; weight, for each normalized performance parameter set, normalized performance parameters corresponding to the normalized performance parameter set according to a preset weight to obtain normalized weighted performance parameters corresponding to the normalized performance parameter set; and generate the performance parameter time sequence image according to normalized weighted performance parameters respectively corresponding to each performance parameter set in the performance parameter sequence.

The apparatus 100 provided by the embodiment of the present application may perform the various methods described in the preceding method embodiments and realize functions and beneficial effects of the various methods described in the preceding method embodiments, which will not be repeated herein.

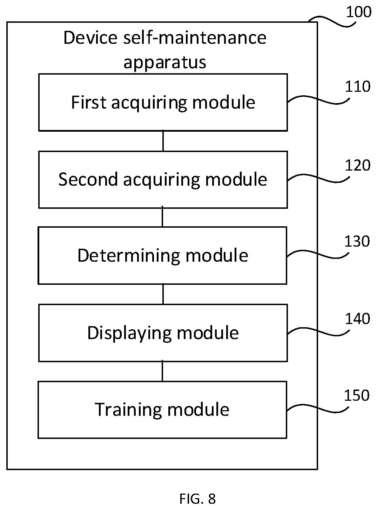

FIG. 8 shows a schematic structural diagram of another device self-maintenance apparatus provided by an embodiment of the present application. The apparatus 100 includes: a first acquiring module 110, a second acquiring module 120, a determining module 130, a displaying module 140, and a training module 150.

The first acquiring module 110 is configured to acquire a performance parameter sequence of a device. The performance parameter sequence includes a preset number of performance parameter sets collected from the device according to a preset collection period. Each performance parameter set includes at least one performance parameter of the device.

The second acquiring module 120 is configured to acquire a performance parameter time sequence image of the device according to the performance parameter sequence.

The determining module 130 is configured to input the performance parameter time sequence image into a pre-trained hidden danger identification model to obtain a hidden danger identification result corresponding to the performance parameter time sequence image.

The displaying module 140 is configured to display the hidden danger identification result.

The training module 150 is configured to acquire a hidden danger identification training sample set, wherein the hidden danger identification training sample set includes a plurality of sample performance parameter time sequence images and a labeling result respectively corresponding to each sample performance parameter time sequence image, and the sample performance parameter time sequence images include normal sample performance parameter time sequence images and hidden danger sample performance parameter time sequence images; and train a preset neural network model according to the hidden danger identification training sample set to obtain the hidden danger identification model.

In some possible implementations, the training module 150 is configured to collect a plurality of sample performance parameter sequences from the device or a similar device of the device, wherein each sample performance parameter sequence includes a preset number of sample performance parameter sets collected from the device or the similar device of the device according to a preset collection period, and each sample performance parameter set includes at least one sample performance parameter of the device or the similar device of the device; acquire a corresponding sample performance parameter time sequence image according to each sample performance parameter sequence, wherein the sample performance parameter time sequence image and the performance parameter time sequence image are same in type; and acquire, in response to an annotation operation by a user, a labeling result corresponding to each sample performance parameter time sequence image.

The apparatus 100 provided by the embodiment of the present application may perform the various methods described in the preceding method embodiments and realize functions and beneficial effects of the various methods described in the preceding method embodiments, which will not be repeated herein.

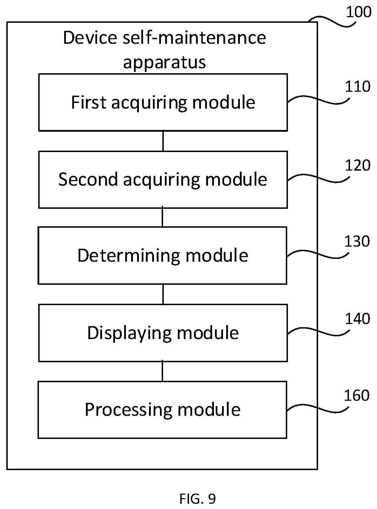

FIG. 9 shows a schematic structural diagram of yet another device self-maintenance apparatus provided by an embodiment of the present application. The apparatus 100 includes: a first acquiring module 110, a second acquiring module 120, a determining module 130, a displaying module 140, and a processing module 160.

The first acquiring module 110 is configured to acquire a performance parameter sequence of a device. The performance parameter sequence includes a preset number of performance parameter sets collected from the device according to a preset collection period. Each performance parameter set includes at least one performance parameter of the device.

The second acquiring module 120 is configured to acquire a performance parameter time sequence image of the device according to the performance parameter sequence.

The determining module 130 is configured to input the performance parameter time sequence image into a pre-trained hidden danger identification model to obtain a hidden danger identification result corresponding to the performance parameter time sequence image.

The displaying module 140 is configured to display the hidden danger identification result.

The processing module 160 is configured to switch a service of the device to a standby device of the device in a case where the hidden danger identification result is a fault hidden danger result; and resume the service of the device in response to a fault hidden danger removing operation for the device by a user.

The apparatus 100 provided by the embodiment of the present application may perform the various methods described in the preceding method embodiments and realize functions and beneficial effects of the various methods described in the preceding method embodiments, which will not be repeated herein.

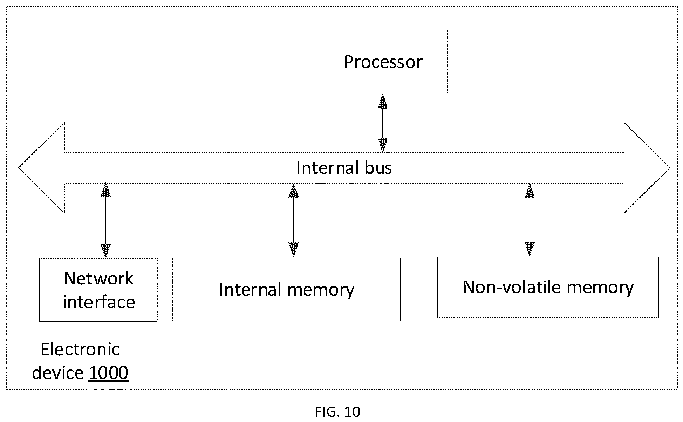

FIG. 10 shows a schematic diagram of a hardware structure of an electronic device 1000 provided by an embodiment of the present application. Referring to the figure, at a hardware level, the electronic device 1000 includes a processor and optionally includes an internal bus, a network interface, and a memory. The memory may contain an internal memory, such as a high-speed random-access memory (RAM), and may further include a non-volatile memory, such as at least one disk memory. Certainly, the electronic device 1000 may further include hardware needed for other services.

The processor, the network interface and the memory may be connected to each other via the internal bus. The internal bus may be an industry standard architecture (ISA) bus, a peripheral component interconnect (PCI) bus, or an extended industry standard architecture (EISA) bus, etc. The bus may be categorized into an address bus, a data bus, a control bus, etc. For ease of representation, the bus is represented by only one bidirectional arrow in this figure, but it does not indicate that there is only one bus or one type of bus.

The memory is configured to store a program.

Specifically, the program may include a program code. The program code includes a computer operating instruction. The memory may include an internal memory and a non-volatile memory and provide an instruction and data to the processor.

The processor reads a corresponding computer program from the non-volatile memory into the internal memory and then runs the same, forming an apparatus for locating a target user at a logical level. The processor executes the program stored in the memory and is specifically configured to perform the methods disclosed by the embodiments shown in FIGS. 1 to 6 and to realize functions and beneficial effects of the various methods described in the preceding method embodiments, which will not be repeated herein.

The above methods disclosed by the embodiments shown in FIGS. 1 to 6 of the present application may be applied to the processor or implemented by the processor. The processor may be an integrated circuit chip that has a capability to process signals. During an implementation process, all steps of the above method may be completed by an integrated logic circuit of hardware or instructions in a form of software in the processor. The above processor may be a general-purpose processor, including a central processing unit (CPU), a network processor (NP), etc., and may further be a digital signal processor (DSP), an application specific integrated circuit (ASIC), a fieldprogrammable gate array (FPGA) or other programmable logic devices, a discrete gate or a transistor logic device, or a discrete hardware component. Various methods, steps, and logical block diagrams disclosed in the embodiments of the present application may be realized or performed. The general-purpose processor may be a microprocessor, or the processor may also be any conventional processor, etc. The steps of the method disclosed in conjunction with the embodiments of the present application may be directly embodied to be performed and completed by a hardware decoding processor, or may be performed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory, and completes the steps of the above method in combination with its hardware.

The electronic device 1000 may also perform the various methods described in the preceding method embodiments and realize functions and beneficial effects of the various methods described in the preceding method embodiments, which will not be repeated herein.

Certainly, in addition to the implementation of software, the electronic device 1000 of the present application does not exclude other implementations, such as a logic device or a combination of software and hardware, etc., which means that a performing subject of the following processing flow is not limited to the individual logic units, but may also be hardware or a logic device.

An embodiment of the present application further proposes a computer-readable storage medium, storing one or more programs. The one or more programs, when executed by an electronic device including a plurality of application programs, cause the electronic device to perform the methods disclosed in the embodiments shown in FIGS. 1 to 6 and to realize functions and beneficial effects of the various methods described in the preceding method embodiments, which will not be repeated herein.

The computer-readable storage medium includes a read-only memory (ROM), a random access memory (RAM), a magnetic disk or an optical disk, etc.

Further, an embodiment of the present application further provides a computer program product, including a computer program stored on a non-transient computer-readable storage medium. The computer program includes a program instruction. The program instruction, when executed by a computer, implements the following flow: the methods disclosed in the embodiments shown in FIGS. 1 to 6 and realizes functions and beneficial effects of the various methods described in the preceding method embodiments, which will not be repeated herein.

In conclusion, the foregoing is only preferred embodiments of the present application and is not intended to limit the scope of protection of the present application. Any modifications, equivalent substitutions, improvements, etc. made within the spirit and principle of the present application shall be included in the scope of protection of the present application.

The system, apparatus, module, or unit clarified in the above embodiments may specifically be implemented by a computer chip or entity, or by a product having a certain function. A typical implementation device is a computer. Specifically, the computer may be, for example, a personal computer, a laptop computer, a cellular telephone, a camera phone, a smart phone, a personal digital assistant, a media player, a navigation device, an e-mail device, a gaming console, a tablet computer, a wearable device, or a combination of any of these devices.

Computer-readable media include permanent and non-permanent, removable and nonremovable media, and may be used by any method or technology to implement information storage. Information may be computer-readable instructions, data structures, modules of a program, or other data. Examples of storage media for a computer include, but are not limited to, a phase-change RAM (PRAM), a static RAM (SRAM), a dynamic RAM (DRAM), other types of random access memories (RAMs), a read only memory (ROM), an electrically erasable programmable ROM (EEPROM), a flash memory or other memory technologies, a compact disc read only memory (CD-ROM), a digital versatile disc (DVD) or other optical storage, a magnetic cartridge tape, magnetic tape disk storage or other magnetic storage devices, or any other nontransfer media that may be configured to store information which may be accessed by a computing device. As defined herein, the computer-readable medium does not include transitory media, such as modulated data signals and carriers.

It also needs to be noted that terms "include," "contain," or any other variant thereof, are intended to cover non-exclusive inclusion, such that a process, method, commodity or device that includes a series of elements includes not only those elements but also other elements that are not explicitly listed, or further includes elements that are inherent to such a process, method, commodity or device. Without further limitation, an element defined by a phrase "including a ..." does not exclude the existence of other identical elements in the process, method, commodity or device including the element.

The various embodiments in this specification are described in a progressive manner, and the same or similar parts between the various embodiments can be referred to each other. Each embodiment focuses on contents different from other embodiments. In particular, for the system embodiment, as it is basically similar to the method embodiment, the description is relatively simple. As for related parts, please refer to partial description in the method embodiment.

## Claims

1. A device self-maintenance method, comprising:

   Acquiring a performance parameter sequence of a device, wherein the performance parameter sequence comprises a preset number of performance parameter sets collected from the device according to a preset collection period, and each performance parameter set comprises at least one performance parameter of the device;
   acquiring a performance parameter time sequence image of the device according to the performance parameter sequence;
   inputting the performance parameter time sequence image into a pre-trained hidden danger identification model to obtain a hidden danger identification result corresponding to the performance parameter time sequence image; and
   displaying the hidden danger identification result.

2. The method according to claim 1, wherein acquiring the performance parameter time sequence image of the device according to the performance parameter sequence comprises:

   normalizing, for each performance parameter set, performance parameters corresponding to the performance parameter set respectively to obtain a normalized performance parameter set;
weighting, for each normalized performance parameter set, normalized performance parameters corresponding to the normalized performance parameter set according to a preset weight to obtain normalized weighted performance parameters corresponding to the normalized performance parameter set; and
generating the performance parameter time sequence image according to normalized weighted performance parameters respectively corresponding to each performance parameter set in the performance parameter sequence.

3. The method according to claim 1, wherein the hidden danger identification model is obtained by training in the following manner:

   acquiring a hidden danger identification training sample set, wherein the hidden danger identification training sample set comprises a plurality of sample performance parameter time sequence images and a labeling result respectively corresponding to each sample performance parameter time sequence image, and the sample performance parameter time sequence images comprise normal sample performance parameter time sequence images and hidden danger sample performance parameter time sequence images; and
   training a preset neural network model according to the hidden danger identification training sample set to obtain the hidden danger identification model.

4. The method according to claim 3, wherein acquiring the hidden danger identification training sample set comprises:

   collecting a plurality of sample performance parameter sequences from the device or a similar device of the device, wherein each sample performance parameter sequence comprises a preset number of sample performance parameter sets collected from the device or the similar device of the device according to a preset collection period, and each sample performance parameter set comprises at least one sample performance parameter of the device or the similar device of the device;
   acquiring a corresponding sample performance parameter time sequence image according to each sample performance parameter sequence, wherein the sample performance parameter time sequence image and the performance parameter time sequence image are same in type; and

acquiring, in response to an annotation operation by a user, the labeling result corresponding to each sample performance parameter time sequence image.

5. The method according to claim 3, wherein the preset neural network model is a generative adversarial network (GAN).

6. The method according to any one of claims 1 to 5, wherein the hidden danger identification result comprises a device normality result or a fault hidden danger result, and the method further comprises:

switching a service of the device to a standby device of the device in a case where the hidden danger identification result is the fault hidden danger result; and

resuming the service of the device in response to a fault hidden danger removing operation for the device by the user.

7. The method according to any one of claims 1 to 5, wherein the method is applied to self-maintenance of an OTN optical module, and the performance parameter sets comprise the following performance parameters: input optical power, output optical power, bias current, temperature offset, and working voltage.

8. A device self-maintenance apparatus, comprising:

a first acquiring module, configured to acquire a performance parameter sequence of a device, wherein the performance parameter sequence comprises a preset number of performance parameter sets collected from the device according to a preset collection period, and each performance parameter set comprises at least one performance parameter of the device;

a second acquiring module, configured to acquire a performance parameter time sequence image of the device according to the performance parameter sequence;

a determining module, configured to input the performance parameter time sequence image into a pre-trained hidden danger identification model to obtain a hidden danger identification result corresponding to the performance parameter time sequence image; and

a displaying module, configured to display the hidden danger identification result.

9. An electronic device, comprising:

a processor; and
a memory arranged to store a computer executable instruction, wherein the executable instruction, when executed, uses the processor to perform the steps of the device self-maintenance method according to any one of claims 1 to 7.

10. A computer-readable storage medium, storing one or more programs, wherein the one or more programs, when executed by an electronic device comprising a plurality of application programs, cause the electronic device to perform the steps of the device self-maintenance method according to any one of claims 1 to 7.

Acquire a performance parameter sequence of a device — S10

Acquire a performance parameter time sequence image of the device according to the performance parameter sequence — S11

Input the performance parameter time sequence image into a pre-trained hidden danger identification model to obtain a hidden danger identification result corresponding to the performance parameter time sequence image — S12

Display the hidden danger identification result — S13

FIG. 1

Normalize, for each performance parameter set, performance parameters corresponding to the performance parameter set respectively to obtain a normalized performance parameter set — S111

Weight, for each normalized performance parameter set, normalized performance parameters corresponding to the normalized performance parameter set according to a preset weight to obtain normalized weighted performance parameters corresponding to the normalized performance parameter set — S112

Generate a performance parameter time sequence image according to normalized weighted performance parameters corresponding to each performance parameter set in the performance parameter sequence — S113

FIG. 2

Normal sample performance parameter time sequence image

Normalized weighted performance parameter

FIG. 3

FIG. 4

FIG. 5

Acquire a performance parameter sequence of a device — S10

Acquire a performance parameter time sequence image of the device according to the performance parameter sequence — S11

Input the performance parameter time sequence image into a pre-trained hidden danger identification model to obtain a hidden danger identification result corresponding to the performance parameter time sequence image — S12

Display the hidden danger identification result — S13

Switch a service of the device to a standby device of the device in a case where the hidden danger identification result is a fault hidden danger result — S14

Resume the service of the device in response to a fault hidden danger removing operation for the device by a user — S15

FIG. 6

100

Device self-maintenance
apparatus

First acquiring module — 110

Second acquiring module — 120

Determining module — 130

Displaying module — 140

FIG. 7

FIG. 8

```
                                                            100
  ┌─────────────────────────────────────┐ ╱
  │    Device self-maintenance           │
  │            apparatus                 │
  │   ┌───────────────────────────────┐  │      110
  │   │   First acquiring module      │  │ ╱
  │   └───────────────────────────────┘  │
  │                 │                    │
  │   ┌───────────────────────────────┐  │      120
  │   │   Second acquiring module     │  │ ╱
  │   └───────────────────────────────┘  │
  │                 │                    │
  │   ┌───────────────────────────────┐  │      130
  │   │     Determining module        │  │ ╱
  │   └───────────────────────────────┘  │
  │                 │                    │
  │   ┌───────────────────────────────┐  │      140
  │   │     Displaying module         │  │ ╱
  │   └───────────────────────────────┘  │
  │                 │                    │
  │   ┌───────────────────────────────┐  │      160
  │   │     Processing module         │  │ ╱
  │   └───────────────────────────────┘  │
  └─────────────────────────────────────┘
```

FIG. 9

FIG. 10

## INTERNATIONAL SEARCH REPORT

| | International application No. |
| --- | --- |
| | **PCT/CN2023/136834** |

**A. CLASSIFICATION OF SUBJECT MATTER**

G06V 10/764(2022.01)i; H04B10/079(2013.01)i

According to International Patent Classification (IPC) or to both national classification and IPC

**B. FIELDS SEARCHED**

Minimum documentation searched (classification system followed by classification symbols)

IPC: G06V, H04B

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, IEEE, CNKI: 性能, 参数, 序列, 时序, 光传输, 图, 隐患, 故障, 归一化, 权重, 加权, performance, parameters, sequence, timing, OTN, Optical Transmission, chart, hazard, error, fault, normalization, weight

**C. DOCUMENTS CONSIDERED TO BE RELEVANT**

| Category* | Citation of document, with indication, where appropriate, of the relevant passages | Relevant to claim No. |
| --- | --- | --- |
| Y | CN 106059661 A (STATE GRID CORPORATION OF CHINA et al.) 26 October 2016 (2016-10-26) <br> claims 14 and 15, description, paragraphs [0004]-[0063], and figure 6 | 1-10 |
| Y | CN 111178456 A (TENCENT TECHNOLOGY (SHENZHEN) CO., LTD.) 19 May 2020 (2020-05-19) <br> description, paragraphs [0007]-[0023], and figure 6 | 1-10 |
| A | CN 113364519 A (LIAOCHENG UNIVERSITY) 07 September 2021 (2021-09-07) <br> entire document | 1-10 |
| A | US 2010161810 A1 (SUN MICROSYSTEMS, INC.) 24 June 2010 (2010-06-24) <br> entire document | 1-10 |
| A | WO 2021051945 A1 (PING AN TECHNOLOGY (SHENZHEN) CO., LTD.) 25 March 2021 (2021-03-25) <br> entire document | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 February 2024** | **22 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/136834**

### C. DOCUMENTS CONSIDERED TO BE RELEVANT

| Category* | Citation of document, with indication, where appropriate, of the relevant passages | Relevant to claim No. |
|---|---|---|
| A | CN 111291673 A (GUIZHOU PROVINCIAL PEOPLE'S HOSPITAL) 16 June 2020 (2020-06-16) entire document | 1-10 |

**EP 4 641 517 A1**

**INTERNATIONAL SEARCH REPORT**
Information on patent family members

International application No.

**PCT/CN2023/136834**

| Patent document cited in search report | | | Publication date (day/month/year) | Patent family member(s) | | | Publication date (day/month/year) |
|---|---|---|---|---|---|---|---|
| CN | 106059661 | A | 26 October 2016 | None | | | |
| CN | 111178456 | A | 19 May 2020 | None | | | |
| CN | 113364519 | A | 07 September 2021 | None | | | |
| US | 2010161810 | A1 | 24 June 2010 | None | | | |
| WO | 2021051945 | A1 | 25 March 2021 | CN | 110825579 | A | 21 February 2020 |
| CN | 111291673 | A | 16 June 2020 | None | | | |

Form PCT/ISA/210 (patent family annex) (July 2022)

23

**REFERENCES CITED IN THE DESCRIPTION**

**Patent documents cited in the description**

- CN 202211728138